# EUROPÄISCHE PATENTSCHRIFT

(11) **EP 0 499 630 B1**
(45) Veröffentlichungstag und Bekanntmachung des Hinweises auf die Patenterteilung: **28.12.1994**
(21) Anmeldenummer: 91914397.4
(22) Anmeldetag: 17.08.1991
(51) Int. Cl.: B65G 29/00, B65G 35/06

(54) **UMLENKSTATION FÜR FÖRDERBÄNDER**
DEVIATION STATION FOR CONVEYOR BELTS
STATION DE TRANSFERT POUR BANDES CONVOYEUSES

(30) Priorität: 30.08.1990 DE 9012413 U
(43) Veröffentlichungstag der Anmeldung: 26.08.1992
(73) Patentinhaber: ROBERT BOSCH GMBH, 70442 Stuttgart (DE)
(72) Erfinder: MAIER, Gernot, D-7000 Stuttgart 50 (DE); BARES, Jan, D-7053 Kernen (DE); SCHNEIDER, Ralph, D-7050 Waiblingen (DE)
(86) Internationale Anmeldenummer: DE9100655
(87) Internationale Veröffentlichungsnummer: WO9204259

(56) Entgegenhaltungen:
- DE-B- 1 077 141
- FR-A- 2 204 555
- FR-A- 2 270 176
- FR-A- 2 367 008

## Beschreibung

### Stand der Technik

Die Erfindung geht aus von einer Vorrichtung zum Umlenken eines Werkstückträgers nach der Gattung des Hauptanspruchs.

Derartige Vorrichtungen werden bei automatischen Bearbeitungs- oder Fördereinrichtungen verwendet, bei welchen ein mit einem Werkstück beladener Werkstückträger von einer Förderbahn auf eine andere Förderbahn weitergeleitet werden soll.

Aus der FR-A-23 67 008 ist eine Vorrichtung zum Umlenken von Werkstückträgern von einer Förderbahn auf eine dazu winklig angrenzende weitere Förderbahn mit einer zwischen den beiden Förderbahnen sich in Förderrichtung drehenden Drehscheibe bekannt. Der Radius der Drehscheibe reicht über das Ende beziehungsweise den Anfang der angrenzenden Förderbahnen hinaus, wobei zur Übergabe der Werkstückträger zwischen Förderbahn und Drehscheibe zusätzliche Förderelemente vorgesehen sind. Ein modularer Aufbau ist mit einer derartigen Förderbandanlage nicht möglich.

Eine bekannte Vorrichtung zum Übertragen von Werkstücken zwischen den Enden von zwei Rollenförderanlagen ist aus der FR-A-22 04 555 bekannt, bei der zwei rechtwinklig zueinander angeordnete Förderbahnen im inneren Bahnbereich mit einer Drehscheibe verbunden sind und im äußeren Bahnbereich Laufrollen und eine seitliche Führung vorgesehen sind. Die Vorrichtung dient zum Transport von Werkstücken mit einer kreisrunden Auflagefläche, mit der die Werkstücke auf den vorgesehenen Transportmitteln aufliegen. Die Drehscheibe ist derart zwischen den beiden Förderbahnen angeordnet, daß der Radius auch hier in die angrenzende Förderbahn hineinragt.

Aus der DE-B 10 77 141 ist eine Drehscheibe für hinter- und nebeneinander angeordnete Förderbänder bekannt, die aus einem biegsamen beziehungsweise elastischen Stoff besteht und an den Umlenkstellen der Förderbänder mit einem Kreisausschnitt rechtwinklig nach unten abgebogen ist.

Aus der DE-A 26 44 137 ist ferner eine Umlenkstation für Förderbänder bekannt, bei der eine parallel zur Förderbahnebene rotierende Greifvorrichtung außermittig zur Förderbahn gelagert ist, die in Umfangsrichtung eine offene Ausnehmung aufweist, die bei ihrem Umlauf mit einem an dem Werkstückträger vorgesehenen Mitnehmer in Eingriff gelangt. Der Einsatz dieser Umlenkstation ist geeignet für eine 90°- oder 180°-Umlenkung des Werkstückträgers.

Dadurch, daß die Greifvorrichtung auf den Werkstückträger eine Zwangsführung ausübt und zusätzlich, um die Richtung des Werkstückträgers beizubehalten, eine äußere Seitenführung vorgesehen sein muß, kann es zu Verklemmungen des Werkstückträgers innerhalb der Umlenkung kommen.

### Vorteile der Erfindung

Die erfindungsgemäße Vorrichtung mit den kennzeichnenden Merkmalen des Hauptanspruchs hat demgegenüber den Vorteil, daß während der gesamten Umlenkbewegung der Werkstückträger verklemmungsfrei geführt wird, sowie ein kontinuierliches Abführen der Werkstückträger von der ankommenden Förderbahn und ein kontinuierlicher Durchlauf der Werkstückträger durch den Bahnabschnitt der Umlenkvorrichtung möglich ist. Mit der erfindungsgemäßen Umlenkvorrichtung entfällt eine Vorvereinzelung der Werkstückträger, so daß damit auch der Aufwand für eine dafür notwendige Steuerung hinfällig ist. Durch den insgesamt kontinuierlichen Durchlauf der Werkstückträger reduziert sich deren Durchlaufzeit innerhalb des Transportbahnsystems.

Durch die in den Unteransprüchen aufgeführten Maßnahmen sind vorteilhafte Weiterbildungen und Verbesserungen der im Hauptanspruch angegebenen Vorrichtung möglich.

Besonders vorteilhaft ist zum sicheren Durchlauf des Werkstückträgers durch die Umlenkvorrichtung, daß am äußeren Bahnbereich zumindest bis an den Kurvenabschnitt heran Längsfördermittel in Förderrichtung der jeweiligen Förderbahn vorgesehen sind. Um einen kontinuierlich Transport des Werkstückträgers zu gewährleisten, hat sich als günstig erwiesen, daß die Umfangsgeschwindigkeit der Drehscheibe auf der Höhe der Mitte der Förderbahn gleich oder annähernd gleich der Geschwindigkeit der beiden Längsfördermittel ist, und daß die Geschwindigkeit der besagten Längsfördermittel gleich oder annähernd gleich der Fördergeschwindigkeit der Förderbahnen ist.

Zur Ausführung der Umlenkvorrichtung als Moduleinheit werden die beiden Längsfördermittel als autonome Förderbänder ausgeführt, wobei die Drehscheibe und die beiden autonomen Förderbänder von einem gemeinsamen Getriebe angetrieben werden. Zur Ausführung des Getriebes hat es sich als vorteilhaft erwiesen, daß die Drehscheibe auf der Antriebswelle des Getriebes sitzt und über ein Kegelradgetriebe zwei Abtriebswellen getrieben werden, die die jeweiligen autonomen Förderbänder antreiben. Das autonome Förderband ist jeweils mit einem endlosen Zahnriemen versehen, welcher über zwei Umlenkrollen geführt ist und mittels einer Spannrolle an den Rollenantrieb gedrückt wird.

Zur Erzielung einer guten Gleitfähigkeit des Werkstückträgers im Bereich der seitlichen Führung sowie der horizontalen Auflagefläche ist die Kurvenbahn in diesem Bereich aus einem gleitfähigen Material, beispielsweise einem Niederdruck-Polyethylen-Kunststoff, ausgeführt. Außerdem ist es zur Einführung des Werkstückträgers in die Kurvenbahn der Umlenkvorrichtung und zur Herausführung aus der Kurvenbahn zweckmäßig, im Bereich der Längsfördermittel sowohl am inneren als auch am äußeren Bahnbereich Führungsleisten als seitliche Führung für den Werkstückträger vorzusehen.

Die Vergrößerung der Förderbahnbreite im Kurvenabschnitt trägt dazu bei, daß ein verklemmungsfreier Transport des Werkstückträges in der Umlenkvorrichtung möglicht ist.

### Zeichnung

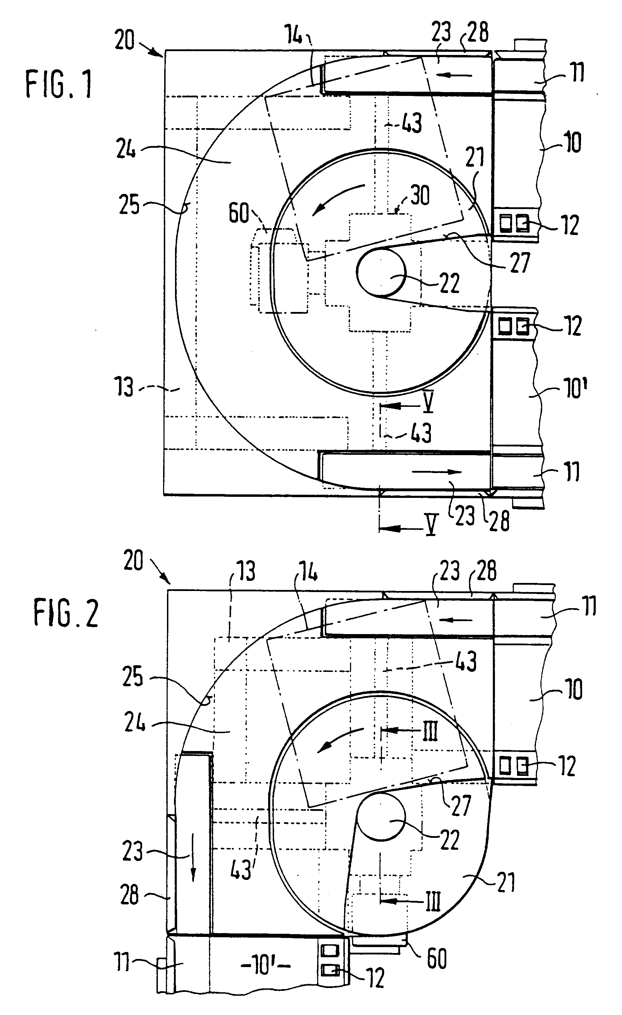

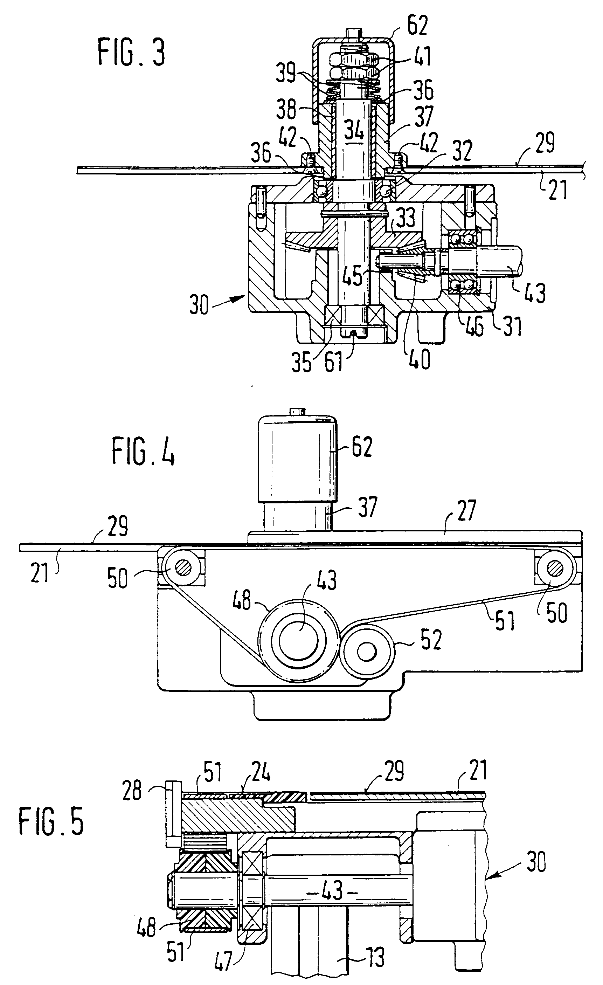

Zwei Ausführungsbeispiele der Erfindung sind in der Zeichnung dargestellt und in der nachfolgenden Beschreibung näher erläutert. Es zeigen Figur 1 eine vereinfachte Darstellung der erfindungsgemäßen Vorrichtung zur Umlenkung von Werkstückträgern in Draufsicht für eine 180°-Umlenkung, Figur 2 eine vereinfachte Darstellung der erfindungsgemäßen Vorrichtung in Draufsicht für eine 90°-Umlenkung, Figur 3 einen Schnitt nach der Linie III-III in Figur 2 durch ein Getriebe zum Antrieb der Drehscheibe und der beiden Längsfördermittel zum Ausführungsbeispiel mit der 90°-Umlenkung, Figur 4 eine Seitendarstellung eines Längsfördermittels und Figur 5 eine Schnittdarstellung eines Antriebs eines Längsfördermittels entsprechend der Linie V-V in Figur 1.

### Beschreibung der Ausführungsbeispiele

Figur 1 zeigt zwei Förderbahnen 10, 10', die in einem Abstand zueinander parallel angeordnet sind. Beide Förderbahnen 10, 10' enthalten im vorliegenden Ausführungsbeispiel jeweils am äußeren Bahnbereich einen Gurtförderer 11 . Der innere Bahnbereich beider Förderbahnen ist jeweils mit einer Rollenbahn 12 versehen. Die beiden Förderbahnen 10, 10' sind mit einer Umlenkvorrichtung 20 verbunden. Die Umlenkvorrichtung 20 ist auf einem Gestell 13 montiert, welches beispielsweise aus Profilschienen aufgebaut ist. Die Profilschienen mit ihren hinterschnittenen Nuten gestatten, daß die Umlenkvorrichtung 20 modular aufgebaut werden kann und variable Anbauflächen für die einzelnen Baueinheiten vorhanden sind.

Die Umlenkvorrichtung 20 weist eine Drehscheibe 21 auf, deren Drehachse 22 in der Mitte zwischen den beiden parallel zueinander verlaufenden Förderbahnen 10, 10' und im Abstand des Radius der Drehscheibe 21 vor den beiden Förderbahnen 10, 10' positioniert ist. Der Radius der Drehscheibe 21 ist im vorliegenden Ausführungsbeispiel so gewählt, daß er bis auf Höhe der Mitte der Förderbahnbreite reicht. Im Bereich der Umlenkvorrichtung 20 ist die Lage eines Werkstückträgers 14 angedeutet.

Im äußeren Bahnbereich der Umlenkvorrichtung 20 ist in Richtung der beiden Förderbahnen 10, 10' an beiden Seiten jeweils ein Längsfördermittel 23 angeordnet.

Im vorliegenden Ausführungsbeispiel ist das Längsfördermittel 23 ein autonomes Förderband, welches aus konstruktiven Gründen in den Kurvenabschnitt der Umlenkvorrichtung 20 hineinreicht. Für das Funktionieren der Umlenkvorrichtung ist es jedoch ausreichend, wenn die Längsfördermittel 23 lediglich bis an den Kurvenabschnitt heranreichen. Es ist aber auch denkbar, die Längsfördermittel 23 jeweils durch den bis an den Kurvenbereich heranreichenden Gurtförderer 11 der jeweiligen Förderbahn 10, 10' zu bilden.

Der Bahnbereich der Umlenkvorrichtung 20 zwischen den beiden Längsfördermitteln, der nicht von der Drehscheibe 21 erfaßt ist, ist als Auflagefläche 24 für den Werkstückträger 14 ausgeführt. Die Auflagefläche 24 liegt in der Ebene der Fördermittel und besitzt selbst keine aktiven Fördermittel. Im Kurvenabschnitt der Umlenkvorrichtung 20 ist am äußeren Bahnbereich eine seitlich Führung 25 für den Werkstückträger 14 vorgesehen, die als Auflaufkurve für den Werkstückträger 14 einen Kreisbogen aufweist, dessen Mittelpunkt die Drehachse 22 der Drehscheibe 21 ist. Die seitliche Führung 25 ist als eine Erhöhung in der Auflagefläche 24 ausgebildet und ist wie die Auflagefläche 24 aus Gleitfähigskeitgründen beispielsweise aus einem Niederdruck-Polyethylen-Material gefertigt.

Zur Einführung in und zur Herausführung aus der Umlenkvorrichtung 20 ist zwischen der jeweiligen Förderbahn und der Drehachse 22 der Drehscheibe 21 eine weiter parabelartig verlaufende Leitschiene 27 vorgesehen. Zur seitlichen Führung am äußeren Bahnbereich ist an beiden Längsfördermitteln 23 jeweils eine weitere Führungsleiste 28 angebracht.

Die Bahnbreite der Umlenkvorrichtung 20 ist im Kurvenabschnitt größer als die Bahnbreite der Förderbahn 10, 10'. Dabei vergrößert sich die Bahnbreite bis zum Scheitelpunkt der Umlenkkurve und verkleinert sich dann wieder bis auf die Breite der Förderbahn in Förderrichtung entsprechend dem Verlauf der Leitschiene 27.

Dies ist funktionell erforderlich, um Verklemmungen der Werkstückträger im Umlenkbereich zu vermeiden. Die Breitenzunahme der Förderbahn im Scheitelpunkt der Umlenkkurve ergibt sich aufgrund der Diagonale des Werkstückträgers.

Figur 2 zeigt ein zweites Ausführungsbeispiel, bei dem die beiden Förderbahnen 10,10' im Winkel von 90° zueinander angeordnet sind. Wie im in Figur 1 dargestellten ersten Ausführungsbeispiel sind auch hier beide Förderbahnen 10, 10' mit einer Umlenkvorrichtung 20 verbunden, wobei die Drehscheibe 21 die Verbindung zwischen den inneren Bahnbereichen der beiden Förderbahnen 10, 10' herstellt. Die Lage der Drehachse 22 der Drehscheibe 21 ist dabei wie im ersten Ausführungsbeispiel so gewählt, daß sie um den Betrag des Radius der Drehscheibe 21 vor der jeweiligen Förderbahn 10, 10' und um den Betrag von der Kante des inneren Bahnbereiches der jeweiligen Förderbahn 10, 10' zurückgesetzt ist, der die Erweiterung der Bahnbreite im Kurvenabschnitt erforderlich macht.

Die beiden Längsfördermittel 23, die Auflagefläche 24, die Führung 25 und die Leitschienen 28 sind ebenfalls, wie im ersten Ausführungsbeispiel beschrieben, angeordnet. Der Verlauf der Leitschiene 27 ist der Anordnung der Drehscheibe 21 angepaßt.

Figur 3 zeigt einen Querschnitt durch ein Getriebe 30 für die Drehscheibe 21 und für die beiden Längsfördermittel 23, wobei sich diese Darstellung auf die Ausführung der 90°-Anordnung der Förderbahnen 10, 10' bezieht.

Im Getriebegehäuse 31 ist eine vertikale Antriebswelle 34 in zwei Kugellager 32, 35 gelagert. Auf dem Innenring des oberen Kugellagers 32 ist über eine Scheibe 36 ein Flansch 37 abgestützt, welcher auf der Antriebswelle 34 mittels einer Buchse 38 gelagert ist.

Auf der oberen Stirnfläche des Flansches 37 stützt sich über eine weitere Scheibe 36 eine Federanordnung 39 ab. Das Ende der Antriebswelle 34 ist mit Gewinde versehen, auf welchem zueinander gekontert zwei Muttern 41 aufgeschraubt sind. Auf der Antriebswelle 34 ist ein Kegelrad 33 befestigt. Durch Anziehen der beiden zueinander gekonterten Muttern 41 wird die Federkraft der Federanordnung 39 eingestellt, wobei sich das Kegelrad 33 mit der Antriebswelle 34 gegen die Unterseite des Innenrings des Kugellagers 32 abstützt und somit der Flansch 37 von oben gegen die Stirnfläche des Innenringes des Kugellagers 32 gepreßt wird. Am Flansch 37 ist ein Bund angesetzt, an dem von unten mittels vier Senkschrauben 42 die Drehscheibe 21 befestigt ist. Zur Sicherheit sind die beiden Muttern 41 mit einer Haube 62 abgedeckt.

Aus dem Getriebegehäuse 31 sind horizontal zwei Antriebswellen 43 für den Antrieb der beiden Längsfördermittel 23 herausgeführt, wobei in Figur 3 wegen der 90°-Umlenkung nur eine Antriebswelle 43 zu sehen ist. Die beiden Antriebswellen 43 sind jeweils mit einem Kegelrad 40 versehen, welche mit dem mit der Antriebswelle 34 verbundenen Kegelrad 33 im Eingriff stehen. Die beiden Antriebswellen 43 sind im Getriebegehäuse kegelradseitig jeweils in einem Gleitlager 45 und einem Kugellager 46 gelagert.

Der Antrieb des Getriebes 30 erfolgt mittels eines in Figur 1 und 2 angedeuteten Elektromotors 60, welcher beispielsweise am Getriebegehäuse 31 angeflanscht sein kann. Die Übertragung des Drehmoments erfolgt über die am unteren Ende der Antriebswelle 34 vorgesehenen Kupplung 61. Die Drehzahl des Elektromotors 60 mußte im vorliegenden Ausführungsbeispiel so gewählt werden, daß die Umfangsgeschwindigkeit der Drehscheibe 21 in der Nähe des Radius auf Höhe der Mitte der Förderbahn 10, 10' gleich oder annähernd gleich der Geschwindigkeit der beiden Förderbahnen 10, 10' ist. Das Übersetzungsverhältnis der Kegelräder 33, 40 ist so gewählt, daß die Bandgeschwindigkeit der beiden Längsfördermittel 23 der Bandgeschwindigkeit der beiden Förderbahnen 10, 10' entspricht.

Als Längsfördermittel 23 ist jeweils, wie in Figur 4 dargestellt, ein autonomes Fördergurtmodul eingesetzt. Jeder der beiden Fördergurtmodule besitzt zwei Umlenkrollen 50, ein Zahnriemenrad 48 und eine weitere Umlenkrolle 52, über die ein Fördergurt 51, beispielsweise ein Zahnriemen, geführt ist. Der Antrieb des Fördergurtmoduls ist auf das Zahnriemenrades 48 gelegt. Zur besseren Kraftübertragung dient die Umlenkrolle 52, die den Zahnriemen 51 gegen das Zahnriemenrad 48 drückt. Die beiden Fördermodule 23 sind gemäß Figur 1 und 2 fluchtend zum Gurtförderer 11 der jeweiligen Förderbahn 10, 10' angeordnet und am Gestell 13 der Umlenkvorrichtung 20 befestigt.

Wie bereits erwähnt, sind die beiden Antriebswellen 43 den beiden Längsfördermitteln 23 zugeführt. Gemäß Figur 5 sind die Antriebswellen 43 jeweils am Längsfördermittel 23 in einem weiteren Kugellager 47 gelagert. Auf der Antriebswelle 43 sitzt das Zahnriemenrad 48, welches den Zahnriemen 51 antreibt.

Aus Figur 3, 4 und 5 ist weiterhin ersichtlich, daß die Oberfläche der Drehscheibe 21 mit einem Reibbelag 29 versehen ist, der beispielsweise aus Gurtbandmaterial besteht.

Die Ebenen der beiden Förderbahnen 10, 10', der beiden Längsfördermittel 23 und des Reibbelages 29 der Drehscheibe 21 sowie der Auflagefläche 24 befinden sich auf gleicher Höhe.

Der Werkstückträger 14 wird auf den beiden Förderbahnen 10, 10' mittels der Gurtförderer 11 durch Reibungskraft bewegt. Dabei liegt der Werkstückträger 14 auf der einen Seite auf dem Gurtförderer 11 und auf der gegenüberliegenden Seite auf der Rollenbahn 12 auf.

Sobald der Werkstückträger an das Ende der ersten Förderbahn 10 gelangt, wird er in Transportrichtung an der linken Seite von der Drehscheibe 21 und an der gegenüberliegenden Seite in Verlängerung zu dem Gurtförderer 11 von dem ersten Längsfördermittel 23 erfaßt und von beiden Fördermittel ebenfalls durch Reibungskraft weiter transportiert. Dabei wird er bis zum Anfang des Kurvenbereiches von dem Längsfördermittel 23 nahezu in der Richtung der Förderbahn 10 geradeaus weitergeführt. Im Kurvenabschnitt erfolgt der Weitertransport des Werkstückträgers 14 lediglich durch die Drehscheibe 21, wobei im äußeren Bahnbereich der Werkstückträger 14 zusätzlich auf der Auflagefläche 24 aufliegt. Die Bewegungsbahn des Werkstückträgers 14 wird im Kurvenabschnitt durch die seitliche Führung 25 begrenzt. Nach innen übernimmt die Leitschiene 27 die Führung des Werkstückträgers 14. Diese Führung ist erforderlich, damit sich der Werkstückträger nicht über seine Diagonale im Kurvenbereich dreht und dadurch seine Orientierung ändert.

Um zu gewährleisten, daß die Reibungskraft zwischen Drehscheibe 21 und Werkstückträger 14 größer ist als zwischen Werkstückträger 14 und Auflagefläche 24, muß der Durchmesser der Drehscheibe 21 so gewählt werden, daß der Masseschwerpunkt des beladenen Werkstückträgers auf der Drehscheibe 21 liegt.

Sobald der Werkstückträger 14 den Kurvenabschnitt verläßt, wird er von dem zweiten Längsfördermittel 23 erfaßt und von diesem zusammen mit der Drehscheibe 21 in Richtung der zweiten Förderbann 10' in eine gerade Längsbewegung überführt. Die Ausrichtung des Werkstückträgers 14 in eine gerade Längsbewegung erfolgt hierbei mit Hilfe der Leitschienen 27 und 28.

Die Beförderung des Werkstückträgers 14 auch im Kurvenbereich mittels Reibungskraft gestattet daß der Umlenkvorrichtung 20 ständig Werkstückträger zugeführt werden können und sich auch im Kurvenabschnitt ein Stau der Werkstückträger ausbilden kann, ohne daß es dabei zu Störungen im Bewegungsablauf kommt. Die Auflösung des Staus erfolgt selbsttätig durch die entsprechende Abführung von Werkstückträgern am Ausgang der Umlenkvorrichtung durch die dort angebrachte Förderbahn 10'.

Damit es bei zu starker Belastung der Umlenkvorrichtung mit Werkstückträgern nicht zu einer Überlastung des Antriebs der Drehscheibe 21 kommt, ist, wie aus Figur 3 zu entnehmen ist, die Antriebswelle 34 der Drehscheibe 21 mittels einer aus der Federanordnung 39 gebildeten Überlastsicherung versehen. Das maximale Drehmoment der Überlastsicherung ist beispielsweise bei einer Werkstückträgerabmessung von 160 x 160 mm auf 4 Nm eingestellt.

## Patentansprüche

1. Vorrichtung zum Umlenken eines Werkstückträgers von einer Förderbahn (10) auf eine in der gleichen Ebene dazu winklig angeordnete weitere Förderbahn (10') mit einer zwischen den beiden Förderbahnen (10, 10') zumindest im inneren Bahnbereich in der Ebene der beiden Förderbahnen sich in Förderrichtung drehenden Drehscheibe (21), mit einer zumindest im Bereich des äußeren Kurvenabschnitts vorgesehenen seitlichen Führung (25) für den Werkstückträger (14) und mit am äußeren Bahnbereich zumindest bis an den Kurvenabschnitt heranreichenden Längsfördermitteln (11) in Förderrichtung der jeweiligen Förderbahn, wobei der Transport des Werkstückträgers (14) durch die Drehscheibe (21) zumindest mittels der zwischen beiden wirkenden Reibungskraft derart erfolgt, daß der Werkstückträger (14) einen Kurvenabschnitt durchläuft, dadurch gekennzeichnet, daß die Drehachse (22) der Drehscheibe (21) um den Betrag ihres Radius vor der jeweiligen Förderbahn (10, 10') liegt und daß die Bahnbreite zumindest im Kurvenabschnitt größer als die Bahnbreite der Förderbahn (10, 10') ist.

2. Vorrichtung nach Anspruch 1, dadurch gekennzeichnet, daß die Oberfläche der Drehscheibe (21) mit einem Reibbelag (29) versehen ist.

3. Vorrichtung nach Anspruch 1, dadurch gekennzeichnet, daß die Umfangsgeschwindigkeit der Drehscheibe (21) auf Höhe der Mitte der Förderbahn (10,10') gleich oder annähernd gleich der Geschwindigkeit des Längsfördermittel (23) ist, und daß die Geschwindigkeit der Längsfördermittel (23) gleich oder annähernd gleich der Fördergeschwindigkeit der Förderbahnen (10, 10') ist.

4. Vorrichtung nach Anspruch 1, dadurch gekennzeichnet, daß die beiden Längsfördermittel (23) jeweils aus einem autonomen Förderband gebildet sind, welches an jeder der beiden Förderbahnen (10, 10') ansetzt und sich jeweils mindestens bis an den Anfang des Kurvenabschnitts erstreckt.

5. Vorrichtung nach Anspruch 4, dadurch gekennzeichnet, daß die Drehscheibe (21) und die beiden autonomen Förderbänder (23) von einem gemeinsamen Getriebe angetrieben sind.

6. Vorrichtung nach Anspruch 5, dadurch gekennzeichnet, daß die Drehscheibe (21) auf der Antriebswelle (34) des Getriebes (30) sitzt und über ein Kegelradgetriebe (33, 40) zwei Abtriebswellen (43) getrieben sind, die jeweils das autonome Förderband (23) antreiben.

7. Vorrichtung nach einem der Ansprüche 4 bis 6, dadurch gekennzeichnet, daß das autonome Förderband (23) jeweils mit einem endlosen Zahnriemen (49) versehen ist, welcher über zwei Umlenkrollen (50) und eine Antriebsrolle (48) geführt sowie mittels einer weiteren Umlenkrolle (52) an die Antriebsrolle (48) gedrückt ist.

8. Vorrichtung nach Anspruch 1, dadurch gekennzeichnet, daß zumindest im Kurvenabschnitt außerhalb der Drehscheibe (21) für den Werkstückträger (14) in der Ebene der Drehscheibe (21) eine horizontale Auflagefläche (24) vorgesehen ist.

9. Vorrichtung nach Anspruch 1, dadurch gekennzeichnet, daß die seitliche Führung (25) im Kurvenabschnitt einen Kreisbogen beschreibt, dessen Mittelpunkt in der Drehachse (22) der Drehscheibe (21) liegt.

10. Vorrichtung nach einem der Ansprüche 1, 8 oder 9, dadurch gekennzeichnet, daß die seitliche Führung (25) sowie die horizontale Auflagefläche (24) aus einem gleitfähigen Material, vorzugsweise einen Polyethylen-Kunststoff, besteht.

11. Vorrichtung nach Anspruch 1, dadurch gekennzeichnet, daß die Bahnbreite im Scheitelpunkt des Kurvenabschnitts gebildet ist aus der Breite einer Auflagefläche (24) und der für die Auflage des Werkstückträgers (14) zur Verfügung stehenden Breite des Kreisrings der Drehscheibe (21) an dieser Stelle.

12. Vorrichtung nach Anspruch 11, dadurch gekennzeichnet, daß sich die Bahnbreite in Förderrichtung von der Förderbahn (10) bis zum Scheitelpunkt des Kurvenabschnitts kontinuierlich vergrößert und nach dem Scheitelpunkt des Kurvenabschnitts hin zur Förderbahn (10') auf deren Bahnbreite kontinuierlich verkleinert.

13. Vorrichtung nach Anspruch 1, dadurch gekennzeichnet, daß von der einen Förderbahn (10) bis zum Anfang des Kurvenabschnitts und vom Ende des Kurvenabschnitts bis zum Anfang der weiteren Förderbahn (10') am inneren Bahnbereich eine Führungsleiste (27) und am äußeren Bahnbereich zumindest teilweise eine weitere Führungsleiste (28) für den Werkstückträger (14) vorgesehen sind.

14. Vorrichtung nach Anspruch 13, dadurch gekennzeichnet, daß sich der Verlauf der inneren Führungsleiste (27) parabelartig in Richtung des Scheitelpunktes des Kurvenabschnitts verläuft.

## Claims

1. Device for deflecting a workpiece support from one conveying path (10) to a further conveying path (10'), arranged at an angle thereto in the same plane, having a turntable (21) which rotates in the conveying direction between the two conveying paths (10, 10') at least in the inner region of the path in the plane of the two conveying paths, having a lateral guide (25) for the workpiece support (14) at least in the region of the outer curved section, and having longitudinal conveying means (11) in the conveying direction of the respective conveying path at the outer region of the path at least up to the curved section, the workpiece support (14) being transported by the turntable (21) at least by means of the frictional force acting between the two in such a way that the workpiece support (14) passes through a curved section, characterised in that the axis of rotation (22) of the turntable (21) lies in front of the respective conveying path (10, 10') by the dimension of its radius, and in that the width of the path at least in the curved section is greater than the width of the conveying path (10, 10').

2. Device according to Claim 1, characterised in that the surface of the turntable (21) is provided with a friction lining (29).

3. Device according to Claim 1, characterised in that the circumferential speed of the turntable (21) at the level of the centre of the conveying path (10, 10') is equal or approximately equal to the speed of the longitudinal conveying means (23), and in that the speed of the longitudinal conveying means (23) is equal or approximately equal to the conveying speed of the conveying paths (10, 10').

4. Device according to Claim 1, characterised in that the two longitudinal conveying means (23) are each formed by an autonomous conveyor belt which starts at each of the two conveying paths (10, 10') and extends in each case at least up to the beginning of the curved section.

5. Device according to Claim 4, characterised in that the turntable (21) and the two autonomous conveyor belts (23) are driven by a common gearing.

6. Device according to Claim 5, characterised in that the turntable (21) is seated on the drive shaft (34) of the gearing (30) and two output shafts (43), which each drive the autonomous conveyor belt (23), are driven via a mitre gear (33, 40).

7. Device according to one of Claims 4 to 6, characterised in that each autonomous conveyor belt (23) is provided with a continuous toothed belt (49) which is guided over two deflection rollers (50) and a drive roller (48) and is pressed onto the drive roller (48) by means of a further deflection roller (52).

8. Device according to Claim 1, characterised in that a horizontal resting surface (24) is provided for the workpiece support (14) in the plane of the turntable (21) at least in the curved section outside the turntable (21).

9. Device according to Claim 1, characterised in that, in the curved section, the lateral guide (25) describes an arc of a circle, whose centre point lies in the axis of rotation (22) of the turntable (21).

10. Device according to one of Claims 1, 8 or 9, characterised in that the lateral guide (25) and the horizontal resting surface (24) consist of a slidable material, preferably a polyethylene plastic.

11. Device according to Claim 1, characterised in that the width of the path is formed at the apex of the curved section from the width of a resting surface (24) and the width of the circle of the turntable (21) available at this point for the resting of the workpiece support (14).

12. Device according to Claim 11, characterised in that the width of the path increases continuously in the conveying direction from the conveying path (10) to the apex of the curved section and, after the apex of the curved section, decreases continuously towards the conveying path (10') to the width of the latter.

13. Device according to Claim 1, characterised in that a guide strip (27) is provided from the one conveying path (10) to the beginning of the curved section and from the end of the curved section to the beginning of the further conveying path (10') at the inner region of the path and a further guide strip (28) for the workpiece support (14) is provided at least partially at the outer region of the path.

14. Device according to Claim 13, characterised in that the course of the inner guide strip (27) extends in the manner of a parabola in the direction of the apex of the curved section.

## Revendications

1. Dispositif pour transférer un porte-pièce d'un convoyeur (10) à un autre convoyeur (10') situé dans le même plan mais faisant un angle par rapport au premier, et entre les deux convoyeurs (10, 10'), au moins dans la zone interne du trajet, dans le plan des deux convoyeurs il y a un disque (21) tournant dans la direction de transfert, au moins un guide latéral (25) dans la zone du segment de courbe extérieure pour le porte-pièce (14) et des moyens de transfert longitudinaux (11) prévus dans la zone de trajet extérieure, arrivant au moins jusqu'au niveau du segment courbe, et agissant dans la direction de transfert du convoyeur respectif, le transport du porte-pièce (14) par le disque tournant (21) se faisant au moins par la force de frottement agissant entre les deux, le porte-pièce (14) traversant le segment courbe, dispositif caractérisé en ce que l'axe de rotation (22) du disque tournant (21) se trouve en avant du convoyeur respectif (10, 10') d'une dimension correspondant à son rayon et en ce que la largeur de trajet, au moins dans le segment courbe, est supérieure à la largeur de trajet des convoyeurs (10, 10')

2. Dispositif selon la revendication 1, caractérisé en ce que la surface extérieure du disque tournant (21) est munie d'un revêtement adhérent (29).

3. Dispositif selon la revendication 1, caractérisé en ce que la vitesse périphérique du disque tournant (21) au niveau du milieu des convoyeurs (10, 10') est égale ou pratiquement égale à la vitesse du moyen de transfert longitudinal (23) et la vitesse de ce dernier est égale ou pratiquement égale à la vitesse de transfert des convoyeurs (10, 10').

4. Dispositif selon la revendication 1, caractérisé en ce que les deux moyens de transfert longitudinaux (23) sont formés chacun d'une bande transporteuse autonome appliquée à chacun des convoyeurs (10, 10') et s'étend au moins jusqu'au début du segment de courbe.

5. Dispositif selon la revendication 4, caractérisé en ce que le disque tournant (21) et les deux convoyeurs à bande (23), autonomes sont entraînés à partir d'une transmission commune.

6. Dispositif selon la revendication 5, caractérisé en ce que le disque tournant (21) est monté sur l'axe d'entraînement (34) de la transmission (30) et entraîne par une transmission à roues coniques (33 à 40), deux axes de sortie (43) qui entraînent chacun une bande transporteuse autonome (23).

7. Dispositif selon l'une des revendications 4 à 6, caractérisé en ce que le convoyeur à bande autonome (23) est muni d'une courroie crantée (49) sans fin passant sur deux poulies de renvoi (50) et guidant un galet d'entraînement (48) en étant poussée contre la poulie d'entraînement (48) par l'intermédiaire d'un autre galet de renvoi (52).

8. Dispositif selon la revendication 1, caractérisé en ce qu'au moins dans le segment courbe, à l'extérieur du disque tournant (21), il est prévu une surface d'appui horizontale (24) située dans le plan du disque tournant (21) pour le porte-pièce (14).

9. Dispositif selon la revendication 1, caractérisé en ce que le guide latéral (25) du segment courbe présente une forme d'arc de cercle dont le centre est l'axe de rotation (22) du disque tournant (21).

10. Dispositif selon l'une des revendications 1, 8, 9 caractérisé en ce que le guide latéral (25) ainsi que la surface d'appui horizontale (24) sont réalisés en une matière à caractéristiques de glissement notamment du polyéthylène.

11. Dispositif selon la revendication 1, caractérisé en ce que la largeur de trajet au sommet du segment courbe comprend la largeur d'une surface d'appui (24) et la largeur de l'anneau de cercle du disque tournant (21) à cet endroit et qui est disponible pour l'appui du porte-pièce (14).

12. Dispositif selon la revendication 11, caractérisé en ce que la largeur de trajet dans la direction de transfert entre le convoyeur (10) jusqu'au sommet du segment courbe augmente en continu et après le sommet du segment courbe cette largeur diminue en continu vers le convoyeur (10') jusqu'à la largeur de trajet de celui-ci.

13. Dispositif selon la revendication 1, caractérisé en ce que partant du convoyeur (10) jusqu'au début du segment courbe et l'extrémité du segment jusqu'au début de l'autre convoyeur (10'), dans la zone de trajet intérieure se trouve un longeron de guidage (27) et dans la zone de trajet extérieure, est prévu au moins partiellement un autre longeron de guidage (28) pour le porte-pièce (14).

14. Dispositif selon la revendication 13, caractérisé en ce que le tracé du longeron de guidage intérieur (27) est de forme parabolique en direction du sommet du segment courbe.
